# EUROPEAN PATENT APPLICATION

(11) **EP 4 679 544 A1**
(43) Date of publication of application: **14.01.2026**
(21) Application number: 24777804.6
(22) Date of filing: 19.03.2024
(51) Int. Cl.: H01M 10/04

(54) **ADHESIVE-TAPE AFFIXING DEVICE AND WINDING APPARATUS**

(30) Priority: 29.03.2023 CN 202310323049; 29.03.2023 CN 202320660911 U
(71) Applicant: Wuxi Lead Intelligent Equipment Co., Ltd., Wuxi, Jiangsu 214028 (CN)
(72) Inventor: GU, Yajun, Wuxi, Jiangsu 214028 (CN); XU, Jiawei, Wuxi, Jiangsu 214028 (CN)
(74) Representative: Rau, Schneck & Hübner Patentanwälte Rechtsanwälte PartGmbB
(86) International application number: PCT/CN2024/082510
(87) International publication number: WO 2024/199015

(57) **Abstract**

A winding apparatus includes a tape bonding device. The tape bonding device is arranged on a conveying path of a pole piece. The tape bonding device includes: a pulling-apart mechanism; a pole piece cutting mechanism and a tape bonding mechanism. The pole piece cutting mechanism is configured to cut the pole piece so that the pole piece is divided into a first pole piece and a second pole piece. The first pole piece and the second pole piece each has a first free end and a second free end that are oppositely arranged. The pulling-apart mechanism is configured to pull the first pole piece and/or the second pole piece so that a gap is formed between the first free end and the second free end in a conveying direction of the pole piece. The tape bonding mechanism includes a first tape feeding assembly, a tape bonding assembly and a first tape storing assembly.

## Description

### CROSS-REFERENCE TO RELATED APPLICATIONS

The present disclosure claims priority to Chinese patent application No. 202320660911.1 filed with the CNIPA on March 29, 2023 and entitled "TAPE BONDING DEVICE AND WINDING APPARATUS", and Chinese patent application No. 202310323049.X filed with the CNIPA on March 29, 2023 and entitled "TAPE BONDING DEVICE AND WINDING APPARATUS", all of which are hereby incorporated by reference in their entireties.

### TECHNICAL FIELD

The present disclosure relates to the technical field of a battery processing apparatus, and particularly to a tape bonding device and a winding apparatus.

### BACKGROUND

In the related art, a winding apparatus is an apparatus for winding diaphragms and pole pieces to form a cell. Specifically, the winding apparatus usually includes an unwinding device and a winding device. The unwinding device is used to continuously convey the pole piece to the winding device. When the winding needle of the winding device rotates, it can wind the pole piece conveyed to the winding needle onto the winding needle to form a cell.

In order to increase the winding efficiency of the winding apparatus, the winding needle usually includes a first winding needle and a second winding needle. After the first winding needle winds a predetermined length of the pole piece, it is necessary to cut the pole piece, and the pole piece forms a free end connected to the unwinding device. Then, a section of the pole piece close to the free end needs to be draped over the second winding needle, so that the second winding needle can continue winding to prepare another cell, and this process is repeated cyclically.

However, the section of the pole piece close to the free end typically only serves to be draped over the second winding needle to facilitate winding by the second winding needle and does not contribute to the electrical performance of the cell. In other words, the section of the pole piece close to the free end is redundant in the cell, resulting in waste of the pole piece.

### SUMMARY

The present disclosure aims to alleviate or resolve at least one of the problems mentioned above to at least some extent.

To achieve the above objectives, in a first aspect, the present application discloses a tape bonding device which is arranged on a conveying path of a pole piece. The tape bonding device includes: a pulling-apart mechanism; a pole piece cutting mechanism configured to cut the pole piece so that the pole piece is divided into a first pole piece and a second pole piece, the first pole piece and the second pole piece each having a first free end and a second free end that are oppositely arranged, the pulling-apart mechanism being configured to pull the first pole piece and/or the second pole piece so that a gap is formed between the first free end and the second free end in a conveying direction of the pole piece; and a tape bonding mechanism including: a first tape feeding assembly configured to provide a first tape of a preset length, and to position a third free end of the first tape opposite to the first free end; a first tape storing assembly configured to pull the first tape so that a fourth free end of the first tape is positioned opposite to the second free end, and at least a part of the first tape deviates from a line connecting the third free end and the fourth free end to buffer the first tape; and a tape bonding assembly configured to adhere the third free end to the first free end and to adhere the fourth free end to the second free end.

Optionally, the first tape feeding assembly includes: a tape reel configured to wind the tape which has the third free end; a tape pulling assembly configured to pull the tape so that the tape reel rotates to unwind and to position the third free end opposite the first free end; and a tape cutting assembly configured to cut the tape after the first tape storing assembly buffers the first tape, so that the tape forms the fourth free end opposite to the third free end, and the tape between the third free end and the fourth free end is the first tape.

Optionally, the tape pulling assembly includes: a tape pulling member; an adhering actuator configured to drive the tape pulling member to move in a direction towards the third free end, so that the tape pulling member contacts the third free end to adhere the third free end to the tape pulling member; and a tape pulling actuator configured to drive the tape pulling member to pull the tape in a direction towards the first free end, so that the third free end is opposite to the first free end.

Optionally, the tape pulling member is a tape pulling roller; the tape pulling assembly further includes: a rotary actuator configured to drive the tape pulling roller to rotate in a first direction about an axis of the tape pulling roller when the tape pulling roller contacts the third free end, the tape pulling actuator being configured to drive the tape pulling member to move in a direction pointing from the first free end to the second free end, rolling and adhering the third free end to a peripheral wall of the tape pulling roller to adhere the third free end to the tape pulling roller.

Optionally, the rotary actuator is further configured to drive the tape pulling roller to rotate in a second direction, opposite to the first direction, about the axis of the tape pulling roller when the third free end is opposite to the first free end, the tape pulling actuator further being configured to drive the tape pulling member to move in a direction pointing from the second free end to the first free end to flatten the third free end, which is rolled and adhered to the peripheral wall of the tape pulling roller, onto the tape bonding assembly.

Optionally, the tape bonding assembly includes: a first gripping assembly arranged corresponding to the first free end, the first gripping assembly having a first adsorption hole, the tape pulling actuator being configured to drive the tape pulling member to pull the tape in the direction towards the first free end, the first adsorption hole being configured to adsorb the first tape, the first gripping assembly being configured to adhere the third free end to the first free end; and a second gripping assembly arranged corresponding to the second free end, the second gripping assembly having a second adsorption hole, the second adsorption hole being configured to adsorb the first tape, the second gripping assembly being configured to adhere the fourth free end to the second free end.

Optionally, the first gripping assembly includes a first gripping plate and a second gripping plate that are arranged opposite to each other in a thickness direction of the pole piece, the first adsorption hole being arranged in the first gripping plate, the first free end and the third free end both being positioned between the first gripping plate and the second gripping plate, the first gripping plate and the second gripping plate being movable towards or away from each other to clamp or release the third free end and the first free end between the first gripping plate and the second gripping plate; and/or, the second gripping assembly includes a third gripping plate and a fourth gripping plate that are arranged opposite to each other in the thickness direction of the pole piece, the second adsorption hole being arranged in the third gripping plate, the second free end and the fourth free end both being positioned between the third gripping plate and the fourth gripping plate, the third gripping plate and the fourth gripping plate being movable towards or away from each other to clamp or release the fourth free end and the second free end between the third gripping plate and the fourth gripping plate.

Optionally, the first tape feeding assembly further includes: a tape-feed guide roller positioned on a conveying path of the tape and upstream of the tape cutting assembly, the tape being draped over the tape-feed guide roller; and a gripping member movable in a direction towards or away from the tape-feed guide roller to clamp or release the tape between the gripping member and the tape-feed guide roller.

Optionally, the first tape feeding assembly further includes: a tape-feeding suction member positioned on a conveying path of the tape and upstream of the tape cutting assembly, the tape-feeding suction member being configured to adsorb the first tape.

Optionally, the first tape storing assembly includes: a tape storing member; and a tape-storing actuator configured to drive the tape storing member to pull the first tape in the thickness direction of the pole piece in a direction away from the pole piece, so that the fourth free end is positioned opposite to the second free end, and at least a part of the first tape deviates from the line connecting the third free end and the fourth free end to buffer the first tape.

Optionally, the tape storing member is a tape storing roller, which is positioned on a side of the first tape close to the pole piece in a thickness direction of the pole piece, the tape-storing actuator being configured to drive the tape storing roller to move in the thickness direction of the pole piece in a direction away from the pole piece, so that the tape storing roller abuts against a surface of the first tape close to the pole piece to pull the first tape.

Optionally, the first tape storing assembly further includes: a first tape-storing guiding roller; and a second tape-storing guiding roller, the second tape-storing guiding roller and the first tape-storing guiding roller being spaced apart from each other in a direction pointing from the fourth free end to the third free end, and both the first tape-storing guiding roller and the second tape-storing guiding roller being positioned on a side of the first tape away from the pole piece, when the tape storing roller abuts against the first tape, a projection of the tape storing roller in a direction perpendicular to the direction pointing from the fourth free end to the third free end is positioned between the first tape-storing guiding roller and the second tape-storing guiding roller.

Optionally, after the third free end is adhered to the first free end and the fourth free end is adhered to the second free end, the tape storing roller is configured to move in the thickness direction of the pole piece and towards the pole piece to release the first tape.

Optionally, the pulling-apart mechanism further includes: a first pulling-apart assembly and a second pulling-apart assembly, the second pulling-apart assembly being arranged opposite the first pulling-apart assembly, the first pulling-apart assembly being configured to pull the first pole piece, the second pulling-apart assembly being configured to pull the second pole piece, so that the gap is formed between the first free end and the second free end in the conveying direction of the pole piece.

Optionally, a direction in which the first pulling-apart assembly pulls the first pole piece is opposite to a direction in which the second pulling-apart assembly pulls the second pole piece; or, the direction in which the first pulling-apart assembly pulls the first pole piece is the same as the direction in which the second pulling-apart assembly pulls the second pole piece, and a speed at which the first pulling-apart assembly pulls the first pole piece is different from a speed at which the second pulling-apart assembly pulls the second pole piece.

Optionally, the first pulling-apart assembly and the second pulling-apart assembly are further configured to clamp the first pole piece and the second pole piece respectively before the pole piece cutting mechanism cuts the pole piece.

Optionally, the first pulling-apart assembly includes: a first clamping plate; a second clamping plate arranged opposite the first clamping plate in a thickness direction of the pole piece, the first pole piece being positioned between the first clamping plate and the second clamping plate; a clamping actuator configured to drive at least one of the first clamping plate and the second clamping plate to move towards the other, so that the first pole piece is clamped between the first clamping plate and the second clamping plate; and a pulling actuator configured to drive the first clamping plate and the second clamping plate to move in unison to pull the first pole piece.

In a second aspect, the present application discloses a winding apparatus, which includes the tape bonding device according to any one of the embodiments of the first aspect above.

Optionally, the winding apparatus includes: a winding device; a merging device; a first diaphragm unwinding device configured to convey a first diaphragm to the merging device; a cathode pole piece unwinding device configured to convey a cathode pole piece to the merging device; a second diaphragm unwinding device configured to convey a second diaphragm to the merging device; and an anode pole piece unwinding device configured to convey an anode pole piece to the merging device, the tape bonding device being arranged on a conveying path of the anode pole piece and upstream of the merging device; the merging device being configured to merge the first diaphragm, the cathode pole piece, the second diaphragm, and the anode pole piece in sequence to form a combined web and convey the combined web to the winding device, and the winding device being configured to wind the combined web to form a cell.

Optionally, the tape bonding device is arranged on a conveying path of the cathode pole piece and upstream of the merging device.

Optionally, the winding device includes: a first winding needle, the merging device is configured to merge the first diaphragm, the cathode pole piece, the second diaphragm, and the anode pole piece in sequence to form a combined web and convey the combined web to the first winding needle, and the first winding needle is configured to wind the combined web to form a cell; a winding cutter configured to cut the combined web at the first tape; and a second winding needle configured to continue winding the combined web to form another cell when the cut combined web is draped over the second winding needle.

Optionally, the first tape includes a third free end, a fourth free end, and an intervening section located between the third free end and the fourth free end, the third free end and the fourth free end both are adhesive, and the intervening section is non-adhesive.

Thus, the present disclosure proposes a tape bonding device. Since the component that serves to be draped over the second winding needle of the winding device is the first tape, rather than the pole piece in the related art, that is to say, the first tape can replace the pole piece in the related art. In this way, the waste of the pole piece can be avoided, thereby achieving the effect of saving the pole piece and reducing the cost of the cell.

### BRIEF DESCRIPTION OF THE DRAWINGS

The above and/or additional aspects and advantages of the present disclosure will become apparent and easily understood from the description of the embodiments in conjunction with the accompanying drawings, in which:
FIG. 1 is a structural diagram of the tape bonding device 100 when used in the winding apparatus;
FIG. 2 is a structural diagram of a tape bonding device 100 provided in an embodiment of the present disclosure, wherein there is no gap between the first free end and the second free end;
FIG. 3 is a structural diagram of the tape bonding device 100 in FIG. 2 in another state, wherein there is a gap between the first free end and the second free end, and the pole piece cutting mechanism is omitted;
FIG. 4 is a structural diagram of the tape bonding device 100 in FIG. 3 in another state wherein the third free end is opposite to the first free end, and the fourth free end is opposite to the second free end;
FIG. 5 is a structural diagram of the tape bonding device 100 in FIG. 4 in another state, wherein the third free end is adhered to the first free end, and the fourth free end is adhered to the second free end;
FIG. 6 is a structural diagram of the tape bonding device in FIG. 5 in another state, where the first tape is flattened;
FIG. 7 is a structural diagram of another tape bonding device provided in the embodiments of the present disclosure;
FIG. 8 is a structural diagram of another winding apparatus provided in the embodiments of the present disclosure.

### Description of reference signs:

1-pulling-apart mechanism; 11-first pulling-apart assembly; 111-first clamping plate; 112-second clamping plate;
12-second pulling-apart assembly;
2-pole piece cutting mechanism; 21-second cutter; 22-second support member;
3-tape bonding mechanism; 31-first tape feeding assembly; 311-tape reel; 312-tape pulling assembly; 3121-tape pulling member; 313-tape cutting assembly; 3131-first cutter; 3132-first support member; 314-tape-feed guide roller; 315-gripping member; 316- tape-feeding adsorption member; 32-tape bonding assembly; 321-first gripping assembly; 3211-first gripping plate; 3212-second gripping plate; 322-second gripping assembly; 3221-third gripping plate; 3222-fourth gripping plate; 33-first tape storing assembly; 331-tape storing member; 333-first tape-storing guiding roller; 334-second tape-storing guiding roller; 34-second tape feeding assembly; 35-second tape storing assembly;
100-tape bonding device; 200-winding device; 201-first winding needle; 202-second winding needle; 203-winding cutter; 300-merging device; 400-first diaphragm unwinding device; 500-cathode pole piece unwinding device; 600-second diaphragm unwinding device; 700-anode pole piece unwinding device;

A-pole piece; A1-first pole piece; A11-first free end; A2-second pole piece; A21-second free end; B-first tape; B1-third free end; B2-fourth free end; C-second tape; F-unwinding device.

### DETAILED DESCRIPTION

The various exemplary embodiments of the present disclosure will now be described in detail with reference to the accompanying drawings. It should be noted that the relative arrangement of the components and steps, numerical expressions, and values described in these embodiments, do not limit the scope of the present disclosure unless otherwise specifically stated.

The description of at least one exemplary embodiment is merely illustrative and is not intended to limit the present disclosure or its application or use in any way.

Technologies, methods, and apparatus known to those of ordinary skill in the relevant field may not be discussed in detail, but should be regarded as part of the specification when appropriate.

In all examples shown and discussed here, any specific values should be interpreted as merely exemplary and not as limitations. Therefore, other examples of the exemplary embodiments may have different values.

It should be noted that similar numerals and letters in the drawings below represent similar items. Therefore, once an item is defined in one drawing, it does not need to be further discussed in subsequent drawings.

Before illustrating the technical solutions of the embodiments of the present disclosure, the technical background of the present disclosure will first be explained.

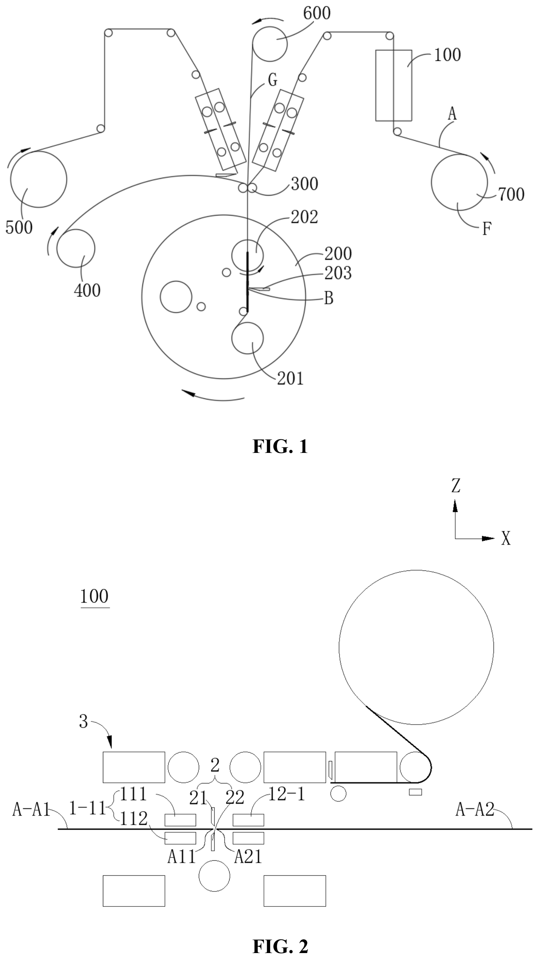

Referring to Figure 1, the winding apparatus is an apparatus used to wind the diaphragm G and the pole piece A to form a cell. Specifically, the winding apparatus usually includes the unwinding device F and the winding device 200. The unwinding device F is configured to continuously convey the pole piece A to the winding device 200. When the winding needle of the winding device 200 rotates, it can wind the pole piece conveyed to the winding needle around the winding needle to form a cell.

In order to increase the winding efficiency of the winding apparatus, the winding needle usually includes a first winding needle 201 and a second winding needle 202. After the first winding needle 201 winds a predetermined length of the pole piece A, it is necessary to cut the pole piece A so that the pole piece forms a free end connected to the unwinding device F. Then, a section of the pole piece A close to the free end needs to be draped over the second winding needle 202, so that the second winding needle 202 can continue winding to prepare another cell. This cycle is repeated.

However, since the section of the pole piece A close to the free end usually only serves to be draped over the second winding needle 202 to facilitate the winding of the second winding needle 202, and does not contribute to the electrical performance of the cell. That is to say, the section of the pole piece A close to the free end is redundant in the cell, causing waste of the pole piece A. Since the cost of the pole piece A is relatively high, it increases the cost of the cell to a certain extent. In view of this, there is an urgent need for a tape bonding device 100 to solve the above problem.

The following will further illustrate the technical solution of the present disclosure in conjunction with specific embodiments and accompanying drawings.

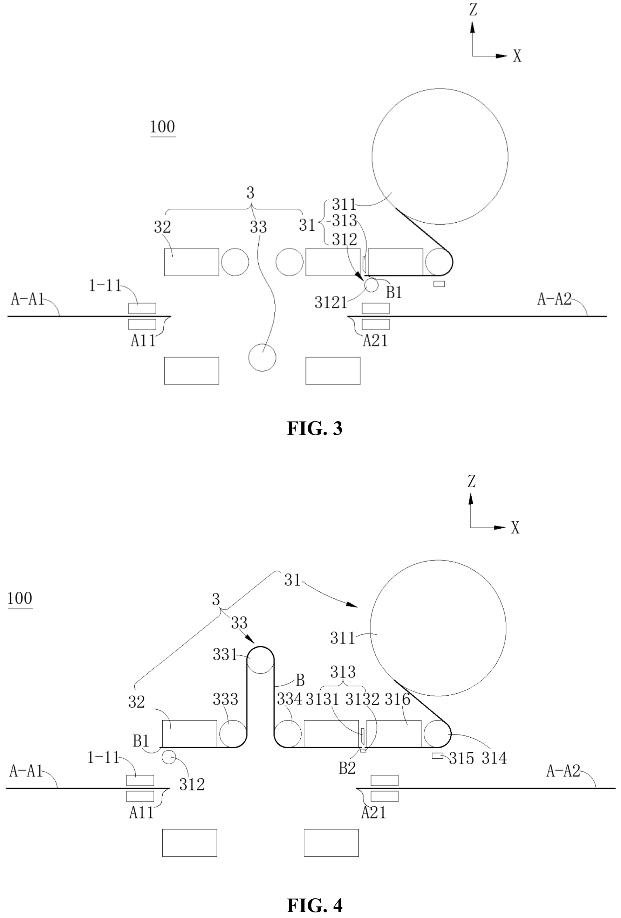

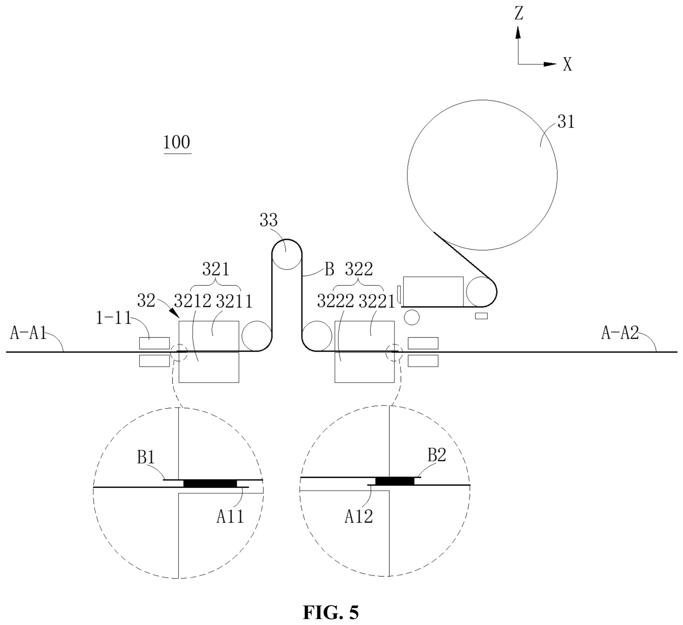

Figure 1 is a structural diagram of the tape bonding device 100 when used in the winding apparatus. Figure 2 is a structural diagram of a tape bonding device 100 provided in an embodiment of the present disclosure (where there is no gap between the first free end and the second free end). Figure 3 is a structural diagram of the tape bonding device 100 in Figure 2 in another state (there is a gap between the first free end and the second free end, and the pole piece cutting mechanism is omitted). Figure 4 is a structural diagram of the tape bonding device 100 in Figure 3 in another state (the third free end is opposite to the first free end, and the fourth free end is opposite to the second free end). Figure 5 is a structural diagram of the tape bonding device 100 in Figure 4 in another state (the third free end is adhered to the first free end, and the fourth free end is adhered to the second free end).

Referring to Figures 1 to 5, the tape bonding device 100 can be provided on the conveying path of the pole piece A. The tape bonding device 100 includes: a pulling-apart mechanism 1, a pole piece cutting mechanism 2, and a tape bonding mechanism 3. Wherein, referring to Figure 2, the pole piece cutting mechanism 2 is used to cut the pole piece A, thereby dividing the pole piece A into a first pole piece A1 and a second pole piece A2, each having a first free end A11 and a second free end A21 that are oppositely arranged. Referring to Figure 3, the pulling-apart mechanism 1 is used to pull the first pole piece A1 and/or the second pole piece A2, creating a gap between the first free end A11 and the second free end A21 in the conveying direction of the pole piece A (the X-axis direction in Figure 3). Referring to Figures 3 and 4, the tape bonding mechanism 3 includes a first tape feeding assembly 31, a tape bonding assembly 32, and a first tape storing assembly 33. The first tape feeding assembly 31 is used to provide a first tape B of a preset length, and to position the third free end B1 of the first tape B opposite the first free end A11. The first tape storing assembly 33 is used to pull the first tape B, so as to position the fourth free end B2 of the first tape B opposite the second free end A21. At least a part of the first tape B deviates from a line connecting the third free end B1 and the fourth free end B2 to buffer the first tape (B). Referring to Figure 5, the tape bonding assembly 32 is used to adhere the third free end B1 to the first free end A11, and to adhere the fourth free end B2 to the second free end A21.

In the embodiments of the present disclosure, when the tape bonding device 100 is applied to the winding apparatus, first, the tape bonding device 100 can be provided on the conveying path of the pole piece A. Then, the pole piece cutting mechanism 2 can be used to cut the pole piece A. After the pole piece cutting mechanism 2 cuts the pole piece A, the pole piece A will be divided into the first pole piece A1 and the second pole piece A2. After the pole piece A is divided into the first pole piece A1 and the second pole piece A2, the pulling-apart mechanism 1 can be used to pull the first pole piece A1 and/or the second pole piece A2 until a gap is formed between the first free end A11 of the first pole piece A1 and the second free end A21 of the second pole piece A2 in the conveying direction of the pole piece A (the X-axis direction in Figure 3).

After a gap is formed between the first free end A11 and the second free end A21, the first tape feeding assembly 31 can be used to provide the first tape B of a preset length and to position the third free end B1 of the first tape B opposite the first free end A11. Then, the first tape storing assembly 33 can be used to pull the first tape B, so as to position the fourth free end B2 of the first tape B opposite the second free end A21, and at least a part of the first tape B deviates from the line connecting the third free end B1 and the fourth free end B2 to buffer the first tape B. Finally, the tape bonding assembly 32 can be used to adhere the third free end B1 to the first free end A11 and to adhere the fourth free end B2 to the second free end A21.

After the third free end B1 is adhered to the first free end A11 and the fourth free end B2 is adhered to the second free end A21, under the unwinding action of the unwinding device F and the winding action of the winding device 200, the first tape B that deviates from the line connecting the third free end B1 and the fourth free end B2 will continue to return to the line connecting between the third free end B1 and the fourth free end B2. When the unwinding device F conveys the first pole piece A1 to the first winding needle 201 of the winding device 200, the first winding needle 201 can wind the first pole piece A1. After the first winding needle 201 of the winding device 200 finishes winding the first pole piece A1 to form a cell, the winding cutter 203 of the winding device 200 cuts the first tape B. Then, the first tape B can be draped over the second winding needle 202 of the winding device 200, so that the second winding needle 202 can continue to wind the second pole piece A2 to form another cell.

It can be seen that in the embodiment, the component that serves to be draped over the second winding needle 202 of the winding device 200 is the first tape B, not the pole piece as in the related art. That is to say, the first tape B can replace the pole piece in the related art. In this way, the waste of the pole piece can be avoided, thereby achieving the effect of saving the pole piece and reducing the cost of the cell.

Additionally, when the third free end B1 of the first tape B is opposite the first free end A11 and the fourth free end B2 is opposite the second free end A21, the pulling action of the first tape storing assembly 33 can cause at least a part of the first tape B to deviate from the line connecting the third free end B1 and the fourth free end B2, thereby achieving the purpose of buffering the tape. Then, the tape bonding assembly 32 is used to adhere the third free end B1 to the first free end A11 and to adhere the fourth free end B2 to the second free end A21, thereby achieving the purpose of adhering the tape.

Thus, the shape of the first tape B will be non-linear, which in turn will make the preset length of the first tape B greater than a gap width between the first free end A11 and the second free end A21. This will enable the first tape B, which is relatively long, to be adhered between the first free end A11 and the second free end A21 even when the gap between the first free end A11 and the second free end A21 is relatively small. Compared to the method of pulling the first pole piece A1 through the first pulling-apart assembly 11 to make the gap width between the first free end A11 and the second free end A21 approximately equal to (or slightly less than) the length of the first tape B in order to adhere the first tape B to the first free end A11 and the second free end A21, the present disclosure only requires the first pulling-apart assembly 11 to slightly pull the first pole piece A1 to create a slight gap between the first free end A11 and the second free end A21, and then the first tape B, which is much longer than the gap width, can be adhered to the first free end A11 and the second free end A21. Since the first pulling-apart assembly 11 does not need to pull the first pole piece A1 over a long distance, the tape bonding device 100 can be made relatively compact in size.

In addition, since it only requires the first pulling-apart assembly 11 to pull the first pole piece A1 to create a gap between the first free end A11 and the second free end A21 in the conveying direction of the pole piece A, followed by the first tape storing assembly 33 pulling the first tape B to buffer the tape, and finally, the tape bonding assembly 32 adhering the third free end B1 to the first free end A11 and the fourth free end B2 to the second free end A21 to achieve the purpose of adhering the tape, the principle of implementation is straightforward. Therefore, the structure of the tape bonding device 100 can be simplified to a certain extent.

Considering that only the third free end B1 and the fourth free end B2 of the first tape B serve the adhering purpose while the remaining positions do not, it is possible to make only the third free end B1 and the fourth free end B2 of the first tape B adhesive, with the remaining positions being non-adhesive. In this way, on the one hand, the purpose of reducing the manufacturing cost of the first tape B can be achieved, and on the other hand, the occurrence of other positions of the first tape B, except for the third free end B1 and the fourth free end B2, adhering to the pole piece A can be avoided.

The structure of the above-mentioned first tape feeding assembly 31 can take various forms. In one possible structure, referring to Figures 3 and 4, the first tape feeding assembly 31 includes: a tape reel 311, a tape pulling assembly 312, and a tape cutting assembly 313. The tape reel 311 is used to hold and wind the tape, which has a third free end B1. The tape pulling assembly 312 is used to pull the tape to rotate the tape reel 311 for unwinding, so as to position the third free end B1 opposite the first free end A11. The tape cutting assembly 313 is used to cut the tape after the first tape storing assembly 33 has buffered the first tape B, forming a fourth free end B2 opposite the third free end B1, with the tape between the third free end B1 and the fourth free end B2 being the first tape B.

In this implementation, when it is necessary to provide the first tape B of a preset length, first, the tape pulling assembly 312 can be used to pull the tape towards the first free end A11 until the third free end B1 is opposite the first free end A11. When the tape pulling assembly 312 pulls the tape, the tape reel 311 starts to rotate and unwind, allowing the tape wound on the tape reel 311 to be fed out. Then, the tape cutting assembly 313 can be used to cut the tape, forming a fourth free end B2 opposite the third free end B1 at the cut location. In this way, the purpose of providing the first tape B of a preset length is achieved.

It can be seen that by simply using the tape pulling assembly 312 to pull the tape, the tape wound on the tape reel 311 can be fed out. Then, by using the tape cutting assembly 313 to cut the tape, the first tape B can be obtained. The principle of the first tape feeding assembly 31 providing the first tape B is simple, which can achieve the purpose of simplifying the structure of the first tape feeding assembly 31.

Of course, the structure of the first tape feeding assembly 31 can also be other possible structures, as long as it can provide the first tape B of a preset length. The embodiments of the present disclosure do not impose any limitations.

In some embodiments, referring to Figure 3, the tape pulling assembly 312 includes: a tape pulling member 3121, an adhering actuator, and a tape pulling actuator. The adhering actuator is used to drive the tape pulling member 3121 to move toward the third free end B1 (the positive direction of the Z-axis in Figure 3), so that the tape pulling member 3121 contacts the third free end B1, thereby adhering the third free end B1 to the tape pulling member 3121. The tape pulling actuator is used to drive the tape pulling member 3121 to pull the tape toward the first free end A11 (the negative direction of the X-axis in Figure 3), so that the third free end B1 is positioned opposite the first free end A11.

In the embodiment, when it is necessary to position the third free end B1 opposite the first free end A11, first, the adhering actuator can be used to drive the tape pulling member 3121 to move toward the third free end B1, so that the tape pulling member 3121 contacts the third free end B1. After the tape pulling member 3121 contacts the third free end B1, the third free end B1 will adhere to the tape pulling member 3121, connecting the third free end B1 with the tape pulling member 3121. Next, when the tape pulling actuator drives the tape pulling member 3121 to move toward the first free end A11, the tape can be pulled synchronously until the third free end B1 is positioned opposite the first free end A11. In this way, the purpose of positioning the third free end B1 opposite the first free end A11 is achieved.

In this process, by using the adhering actuator to drive the tape pulling member 3121 to move toward the third free end B1, the tape pulling member 3121 contacts the third free end B1. By cleverly utilizing the adhesive property of the third free end B1, the third free end B1 is connected to the tape pulling member 3121. There is no need to specifically design a gripping structure to grip the third free end B1. Therefore, the structure of the tape pulling assembly 312 can be simplified.

Of course, other approaches can be employed to connect the tape pulling member 3121 with the third free end B1. For instance, the tape pulling member 3121 may be a gripper that grips the third free end B1, thereby achieving the purpose of connecting the tape pulling member 3121 with the third free end B1. The embodiments of the present disclosure do not impose any limitations.

The above-mentioned adhering actuator may be an electric cylinder, a pneumatic cylinder, or any other component or structure capable of driving the tape pulling member 3121 to move toward the third free end B1. The embodiments of the present disclosure do not limit the adhering actuator. Similarly, the tape pulling actuator may also be an electric cylinder, a pneumatic cylinder, or any other possible structure, as long as it can drive the tape pulling member 3121 to move toward the first free end A11. The embodiments of the present disclosure do not impose any limitations.

In order to achieve a more secure connection between the tape pulling member 3121 and the third free end B1, and to prevent the third free end B1 from detaching from the tape pulling member 3121 when the tape pulling actuator drives the tape pulling member 3121 to move toward the first free end A11, in some embodiments, referring to Figure 3, the tape pulling member 3121 is a tape pulling roller. The tape pulling assembly 312 also includes a rotary actuator, which is used to drive the tape pulling roller to rotate in the first direction (the counterclockwise direction in Figure 3) around its axis when the tape pulling roller contacts the third free end B1. The tape pulling actuator is used to drive the tape pulling member 3121 to move in the direction pointing from the first free end A11 to the second free end A21 (the positive direction of the X-axis in Figure 3), rolling and adhering the third free end B1 to the peripheral wall of the tape pulling roller, thereby adhering the third free end B1 to the tape pulling roller.

When the tape pulling roller contacts the third free end B1, the rotary actuator drives the tape pulling roller to rotate around the axis of the tape pulling roller in the first direction; meanwhile, the tape pulling actuator drives the tape pulling member 3121 to move in the direction pointing from the first free end A11 to the second free end A21, rolling and adhering the third free end B1 to the peripheral wall of the tape pulling roller. In this way, the adhering area between the third free end B1 and the tape pulling roller can be made relatively large, thus allowing the third free end B1 to be more firmly adhered to the tape pulling roller, thereby avoiding the situation where, when the tape pulling actuator drives the tape pulling member 3121 to move toward the first free end A11, the third free end B1 detaches from the tape pulling member 3121.

After the tape pulling actuator drives the tape pulling member 3121 to move toward the first free end A11, so that the third free end B1 is opposite to the first free end A11, in order to facilitate the subsequent adhesion of the first free end A11 to the third free end B1, in some embodiments, referring to Figure 4, the rotary actuator is further configured to, when the third free end B1 is opposite to the first free end A11, drive the tape pulling roller to rotate about the axis of the tape pulling roller in a second direction opposite to the first direction. The tape pulling actuator is further configured to drive the tape pulling member 3121 to move in the direction pointing from the second free end A21 to the first free end A11, so as to flatten the third free end B1, which is rolled and adhered to the peripheral wall of the tape pulling roller, onto the tape bonding assembly 32.

When the rotary actuator drives the tape pulling roller to rotate about the axis of the tape pulling roller in the second direction (the clockwise direction in Figure 4), meanwhile the tape pulling actuator drives the tape pulling roller to move in the direction pointing from the second free end A21 to the first free end A11 (the negative direction of the X-axis in Figure 4), the third free end B1, which is rolled and adhered to the peripheral wall of the tape pulling roller, will be gradually flattened onto the tape bonding assembly 32, thereby facilitating the subsequent adhesion of the first free end A11 to the third free end B1.

The aforementioned rotary actuator may be a motor. When the rotary actuator is a motor, a rotating shaft of the motor can be connected to the tape pulling roller such that the axis of the rotating shaft coincides with the axis of the tape pulling roller, thereby achieving the purpose of driving the tape pulling roller to rotate in the first direction or the second direction.

In order to enable the first tape feeding assembly 31 to convey the tape more effectively, in some embodiments, referring to Figure 4, the first tape feeding assembly 31 further includes: a tape-feed guide roller 314 and a gripping member 315. The tape-feed guide roller 314 is positioned on the conveying path of the tape and upstream of the tape cutting assembly 313, and the tape is laid over the tape-feed guide roller 314. The gripping member 315 can move in a direction toward or away from the tape-feed guide roller 314 so as to grip or release the tape between the gripping member 315 and the tape-feed guide roller 314.

Since the tape-feed guide roller 314 is positioned on the conveying path of the tape and upstream of the tape cutting assembly 313, with the tape being laid over the tape-feed guide roller 314, the tape-feed guide roller 314 can serve a guiding function when the tape is conveyed from the tape reel 311 to the tape cutting assembly 313, making the conveyance of the tape smoother.

By moving the gripping member 315 in the direction toward the tape-feed guide roller 314, the tape can be gripped between the gripping member 315 and the tape-feed guide roller 314. With this configuration, before the tape is cut by the tape cutting assembly 313, the tape can first be fixed through the cooperation between the gripping member 315 and the tape-feed guide roller 314, and then the tape is cut by the tape cutting assembly 313. With this configuration, abnormal pulling of the tape can be prevented when the tape is cut by the tape cutting assembly 313, thereby avoiding abnormal conveying of the tape.

When continued conveyance of the tape is required, the gripping member 315 can be moved in the direction away from the tape-feed guide roller 314, so that the tape is released between the gripping member 315 and the tape-feed guide roller 314, thereby facilitating continued conveyance of the tape.

In some embodiments, referring to Figure 4, the first tape feeding assembly 31 further includes: a tape-feeding suction member316. The tape-feeding suction member316 is positioned on the conveying path of the tape and upstream of the tape cutting assembly 313, and is configured to adsorb the first tape B.

As the tape-feeding suction member316 is positioned upstream of the tape cutting assembly 313, the tape-feeding suction member316 can exert an adsorbing action on the tape. Therefore, before the tape is cut by the tape cutting assembly 313, the tape can first be fixed by the tape-feeding suction member316. Then, the tape cutting assembly 313 performs the cut. With this configuration, abnormal pulling of the tape can be prevented when the tape is cut by the tape cutting assembly 313, thereby avoiding abnormal conveying of the tape.

In some embodiments, referring to Figure 4, the tape cutting assembly 313 includes: a first cutter 3131, a first support member 3132 and a tape cutting actuator. The first cutter 3131 and the first support member 3132 are arranged opposite each other in a thickness direction of the tape (the Z-axis direction in Figure 4), the tape being positioned between the first cutter 3131 and the first support member 3132. The tape cutting actuator is configured to drive at least one of the first cutter 3131 and the first support member 3132 to move toward the other, so that the tape is gripped between the first cutter 3131 and the first support member 3132 and thereby cut.

Since the tape is positioned between the first cutter 3131 and the first support member 3132, when the tape needs to be cut the tape cutting actuator can drive at least one of the first cutter 3131 and the first support member 3132 to move toward the other, so that the tape is gripped between the first cutter 3131 and the first support member 3132. In this way, the purpose of cutting the tape is achieved. The principle of tape cutting is straightforward, and the structure of the tape cutting assembly 313 can be simplified.

The tape cutting actuator mentioned above may be a pneumatic cylinder, an electric cylinder, or the like. The embodiments of the present disclosure do not impose any limitations.

In some embodiments, referring to Figure 4, the first tape storing assembly 33 includes: a tape storing member 331 and a tape-storing actuator. The tape-storing actuator is configured to drive the tape storing member 331 to pull the first tape B in the thickness direction of the pole piece A and in a direction away from the pole piece A (the positive direction of the Z-axis in Figure 4), so that the fourth free end B2 is opposite to the second free end A21, and at least a part of the first tape B deviates from the line connecting the third free end B1 and the fourth free end B2, thereby buffering the first tape B.

Under the condition that the tape bonding assembly 32 positions the third free end B1 of the first tape B opposite the first free end A11, when the tape-storing actuator drives the tape storing member 331 to pull the first tape B in the thickness direction of the pole piece A and away from the pole piece A, the fourth free end B2 is brought opposite the second free end A21 and at least a part of the first tape B deviates from the line connecting the third free end B1 and the fourth free end B2. In this way, on the one hand, it facilitates the subsequent adhesion of the fourth free end B2 to the second free end A21 by the tape bonding assembly 32; on the other hand, it also achieves the purpose of buffering the tape.

By causing the tape-storing actuator to drive the tape storing member 331 to pull the first tape B in the thickness direction of the pole piece A and in a direction away from the pole piece A, interference between the pole piece A and the first tape B can be avoided.

Of course, the tape storing member 331 can also pull the first tape B in the thickness direction of the pole piece A and toward the pole piece A, as long as it causes at least a part of the first tape B to deviate from the line connecting the third free end B1 and the fourth free end B2. The embodiments of the present disclosure do not impose any limitations.

The tape-storing actuator mentioned above may be a pneumatic cylinder, an electric cylinder, or the like. The embodiments of the present disclosure do not impose any limitations on the tape-storing actuator.

In some embodiments, referring to Figure 4, the tape storing member 331 is a tape storing roller. The tape storing roller is positioned, in the thickness direction of the pole piece A, on the side of the first tape B that is close to the pole piece A, and the tape-storing actuator is configured to drive the tape storing roller to move in the thickness direction of the pole piece A and away from the pole piece A, so that the tape storing roller abuts against a surface of the first tape B close to the pole piece A, thereby pulling the first tape B.

Since the tape storing roller is positioned, in the thickness direction of the pole piece A, on the side of the first tape B that is close to the pole piece A, when the tape-storing actuator drives the tape storing roller to move in the thickness direction of the pole piece A and away from the pole piece A, the tape storing roller abuts against the surface of the first tape B close to the pole piece A. after the tape storing roller abuts against the surface of the first tape B close to the pole piece A, when the tape-storing actuator continues to drive the tape storing roller to move in the thickness direction of the pole piece A and away from the pole piece A, the tape storing roller pulls the first tape B, causing at least a part of the first tape B to deviate from the line connecting the third free end B1 and the fourth free end B2.

By positioning the tape storing roller, in the thickness direction of the pole piece A, on the side of the first tape B that is close to the pole piece A, the tape storing roller can abut against the pole piece A when the tape-storing actuator drives the tape storing roller to move in the thickness direction of the pole piece A and away from the pole piece A. Thus, the purpose of pulling the first tape B is achieved without providing any complex gripper structure, making the design simple and ingenious.

To enable the tape storing member 331 to pull the first tape B more effectively, in some embodiments, referring to Figure 4, the first tape storing assembly 33 further includes: a first tape-storing guiding roller 333 and a second tape-storing guiding roller 334. The second tape-storing guiding roller 334 and the first tape-storing guiding roller 333 are spaced apart from each other in the direction pointing from the fourth free end B2 to the third free end B1 (the X-axis direction in Figure 4), and both the first tape-storing guiding roller 333 and the second tape-storing guiding roller 334 are positioned on the side of the first tape B away from the pole piece A. When the tape storing roller abuts against the first tape B, the projection of the tape storing roller in the direction (the Z-axis direction in Figure 4) perpendicular to the direction pointing from the fourth free end B2 to the third free end B1 is positioned between the first tape-storing guiding roller 333 and the second tape-storing guiding roller 334.

When the tape storing roller abuts against the first tape B, the projection of the tape storing roller in the direction perpendicular to the direction pointing from the fourth free end B2 to the third free end B1 is positioned between the first tape-storing guiding roller 333 and the second tape-storing guiding roller 334, and both the first tape-storing guiding roller 333 and the second tape-storing guiding roller 334 are positioned on the side of the first tape B away from the pole piece A. Therefore, when the tape storing roller pulls the first tape B in the thickness direction of the pole piece A and away from the pole piece A (the positive Z-axis direction in Figure 4), the first tape B abuts against the first tape-storing guiding roller 333 and the second tape-storing guiding roller 334. In this way, the first tape-storing guiding roller 333 and the second tape-storing guiding roller 334 effectively guide the first tape B, thereby rendering the movement of the first tape B smoother.

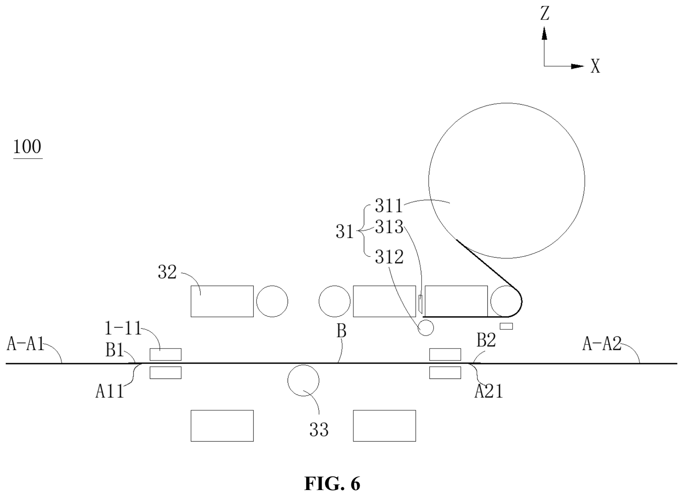

In some embodiments, referring to Figures 5 and 6, after the third free end B1 is adhered to the first free end A11 and the fourth free end B2 is adhered to the second free end A21, the tape storing roller is configured to move in the thickness direction of the pole piece A and toward the pole piece A so as to release the first tape B.

By causing the tape storing roller to move in the thickness direction of the pole piece A and toward the pole piece A, the tape storing roller functions to guide the first tape B during the release of the first tape B, enabling the first tape B to be flattened out smoothly.

The movement of the tape storing roller in the thickness direction of the pole piece A and toward the pole piece A can be realized in various ways. In one possible implementation, the tape-storing actuator can drive the tape storing roller to move in the thickness direction of the pole piece A and toward the pole piece A. In another possible implementation, the first tape B can pull the tape storing roller to move in the thickness direction of the pole piece A and toward the pole piece A. The embodiments of the present disclosure do not impose any limitations.

In some embodiments, referring to Figures 4 and 5, the tape bonding assembly 32 includes: a first gripping assembly 321 and a second gripping assembly 322. The first gripping assembly 321 is arranged opposite the first free end A11. A first adsorption hole (not shown in Figures 4 and 5) is provided in the first gripping assembly 321. The tape pulling actuator is used to drive the tape pulling member 3121 to pull the tape toward the first free end A11, the first adsorption hole is used to adsorb the first tape B, and the first gripping assembly 321 is used to adhere the third free end B1 to the first free end A11. The second gripping assembly 322 is arranged opposite the second free end A21. A second adsorption hole (not shown in Figures 4 and 5) is provided in the second gripping assembly 322. The second adsorption hole is used to adsorb the first tape B, and the second gripping assembly 322 is used to adhere the fourth free end B2 to the second free end A21.

By providing the first adsorption hole in the first gripping assembly 321, the first adsorption hole can pre-fix the first tape B, prevent the first tape B from shaking, and thereby improve the adhesion accuracy when the first gripping assembly 321 subsequently adheres the third free end B1 to the first free end A11. Similarly, by providing the second adsorption hole in the second gripping assembly 322, the second adsorption hole can pre-fix the first tape B, prevent the first tape B from shaking, and thereby improve the adhesion accuracy when the second gripping assembly 322 subsequently adheres the fourth free end B2 to the second free end A21.

In some embodiments, the first gripping assembly 321 includes a first gripping plate 3211 and a second gripping plate 3212 arranged opposite each other in the thickness direction of the pole piece A (the Z-axis direction in FIG. 5). The first adsorption hole is provided in the first gripping plate 3211, and both the first free end A11 and the third free end B1 are positioned between the first gripping plate 3211 and the second gripping plate 3212. The first gripping plate 3211 and the second gripping plate 3212 are movable toward or away from each other so as to clamp or release the third free end B1 and the first free end A11 therebetween. The second gripping assembly 322 includes a third gripping plate 3221 and a fourth gripping plate 3222 arranged opposite each other in the thickness direction of the pole piece A. The second adsorption hole is provided in the third gripping plate 3221, and both the second free end A21 and the fourth free end B2 are positioned between the third gripping plate 3221 and the fourth gripping plate 3222. The third gripping plate 3221 and the fourth gripping plate 3222 are movable toward or away from each other so as to clamp or release the fourth free end B2 and the second free end A21 therebetween.

Since the first free end A11 and the third free end B1 are both positioned between the first gripping plate 3211 and the second gripping plate 3212, when the first gripping plate 3211 and the second gripping plate 3212 move toward each other, they can clamp the third free end B1 and the first free end A11 therebetween, thereby adhering the third free end B1 to the first free end A11. The manner of adhering the third free end B1 to the first free end A11 is extremely simple, allowing the structure of the first gripping assembly 321 to be simplified and the cost of the first gripping assembly 321 to be reduced.

Similarly, since the second free end A21 and the fourth free end B2 are both positioned between the third gripping plate 3221 and the fourth gripping plate 3222, when the third gripping plate 3221 and the fourth gripping plate 3222 move toward each other, they can clamp the second free end A21 and the fourth free end B2 therebetween, thereby adhering the fourth free end B2 to the second free end A21. The manner of adhering the fourth free end B2 to the second free end A21 is extremely simple, allowing the structure of the second gripping assembly 322 to be simplified and the cost of the second gripping assembly 322 to be reduced.

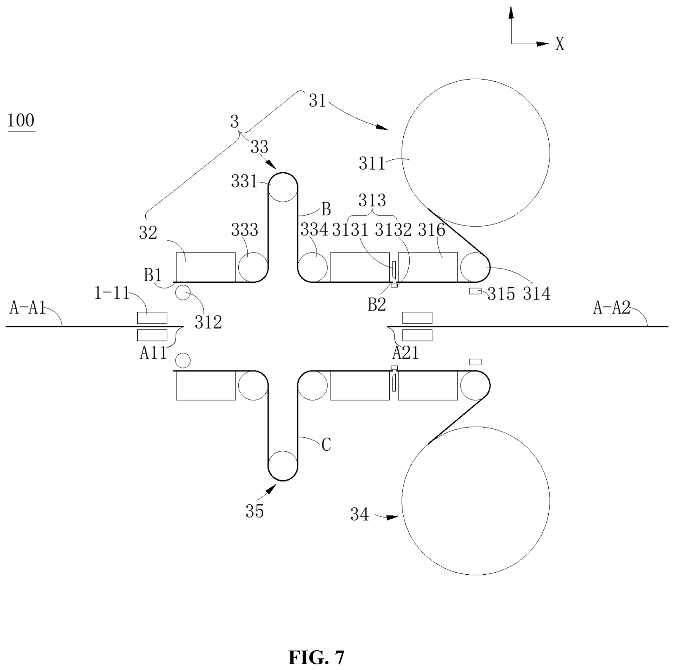

In some embodiments, referring to Figure 7, the tape bonding mechanism 3 further includes: a second tape feeding assembly 34 and a second tape storing assembly 35. The second tape feeding assembly 34 is configured to provide a second tape C of a preset length and to position a fifth free end of the second tape C opposite the first free end A11. The second tape storing assembly 35 is configured to pull the second tape C, so as to position a sixth free end of the second tape C opposite the second free end A21. At least a part of the second tape C deviates from a line connecting the fifth free end and the sixth free end. The tape bonding assembly 32 is further configured to adhere the fifth free end to the first free end A11 and to adhere the sixth free end to the second free end A21.

By adhering the fifth free end to the first free end A11 and the sixth free end to the second free end A21, the second tape C can be adhered between the first free end A11 and the second free end A21, thereby enabling the first free end A11 and the second free end A21 to be connected through the second tape C. With this configuration, in addition to connecting the first free end A11 and the second free end A21 through the first tape B, the first free end A11 and the second free end A21 can also be connected through the second tape C, rendering the connection between the first free end A11 and the second free end A21 even more secure.

The structure of the second tape feeding assembly 34 may be similar to that of the first tape feeding assembly 31. For details, please refer to the description of the first tape feeding assembly 31 in the above embodiments, and the embodiment of the present disclosure will not repeat it here. The structure of the second tape storing assembly 35 may be similar to that of the first tape storing assembly 33; for details, please refer to the description of the first tape storing assembly 33 in the above embodiments, and the embodiment of the present disclosure will not repeat it here.

Of course, the fact that the aforesaid tape bonding mechanism 3 further includes the second tape feeding assembly 34 and the second tape storing assembly 35 is only one possible implementation disclosed in the present embodiment that enables the first free end A11 and the second free end A21 to be connected more firmly. In another possible implementation, a robot arm may be used to adhere the second tape C between the first free end A11 and the second free end A21. Alternatively, a third tape and a fourth tape that are shorter than the first tape B may be provided, and by means of the robot arm or any other possible structure, one end of the third tape may be adhered to the first free end A11 while the other end is adhered to the first tape B, and one end of the fourth tape may be adhered to the second free end A21 while the other end is adhered to the first tape B. In this way, the purpose of achieving a more secure connection between the first free end A11 and the second free end A21 can also be realized.

In some embodiments, referring to Figure 2, the pulling-apart mechanism 1 includes: a first pulling-apart assembly 11 and a second pulling-apart assembly 12 arranged opposite the first pulling-apart assembly 11. The first pulling-apart assembly 11 is configured to pull the first pole piece A1, and the second pulling-apart assembly 12 is configured to pull the second pole piece A2, so that a gap is formed between the first free end A11 and the second free end A21 in the conveying direction of the pole piece A.

By providing the first pulling-apart assembly 11 and the second pulling-apart assembly 12, in addition to pulling the first pole piece A1with the first pulling-apart assembly 11, the second pole piece A2 can be pulled by the second pulling-apart assembly 12, enabling the first free end A11 and the second free end A21 to form a gap more rapidly.

The structure of the second pulling-apart assembly 12 may be identical to that of the first pulling-apart assembly 11, providing the same or similar advantages. For details, please refer to the description of the first pulling-apart assembly 11 in the above embodiments; this embodiment of the present disclosure will not repeat it here.

There are various ways to form a gap between the first free end A11 and the second free end A21 in the conveying direction of the pole piece A. In one possible implementation, the direction in which the first pulling-apart assembly 11 pulls the first pole piece A1 is the same as the direction in which the second pulling-apart assembly 12 pulls the second pole piece A2, and the speed at which the first pulling-apart assembly 11 pulls the first pole piece A1 is different from the speed at which the second pulling-apart assembly 12 pulls the second pole piece A2. By causing the first pulling-apart assembly 11 to pull the first pole piece A1in the same direction as the second pulling-apart assembly 12 pulls the second pole piece A2, while the speed at which the first pulling-apart assembly 11 pulls the first pole piece A1 is different from the speed at which the second pulling-apart assembly 12 pulls the second pole piece A2, a speed differential can be created between the speed at which the first pulling-apart assembly 11 pulls the first pole piece A1 and the speed at which the second pulling-apart assembly 12 pulls the second pole piece A2. In this way, a gap is formed between the first free end A11 and the second free end A21 in the conveying direction of the pole piece A.

In another possible implementation, the direction in which the first pulling-apart assembly 11 pulls the first pole piece A1 is opposite to the direction in which the second pulling-apart assembly 12 pulls the second pole piece A2. By causing the first pulling-apart assembly 11 to pull the first pole piece A1 in the opposite direction to the second pulling-apart assembly 12 pulling the second pole piece A2, a gap can be formed more rapidly between the first free end A11 and the second free end A21.

In some embodiments, referring to Figure 2, before the pole piece cutting mechanism 2 cuts the pole piece A, the first pulling-apart assembly 11 and the second pulling-apart assembly 12 are further configured to clamp the first pole piece A1 and the second pole piece A2, respectively.

Before the pole piece cutting mechanism 2 cuts the pole piece A, clamping the first pole piece A1 and the second pole piece A2 with the first pulling-apart assembly 11 and the second pulling-apart assembly 12, respectively, can prevent the pole piece A from random sliding or shaking during the process in which the pole piece cutting mechanism 2 cuts the pole piece A.

In some embodiments, referring to Figure 2, the first pulling-apart assembly 11 includes: a first clamping plate 111, a second clamping plate 112, a clamping actuator and a pulling actuator. The second clamping plate 112 is arranged opposite the first clamping plate 111 in the thickness direction of the pole piece A (the Z-axis direction in Figure 2), and the first pole piece A1 is positioned between the first clamping plate 111 and the second clamping plate 112. The clamping actuator is configured to drive at least one of the first clamping plate 111 and the second clamping plate 112 to move toward the other, so that the first pole piece A1 is clamped between the first clamping plate 111 and the second clamping plate 112. The pulling actuator is configured to drive the first clamping plate 111 and the second clamping plate 112 to move in unison, so as to pull the first pole piece A1.

The second clamping plate 112 is arranged opposite the first clamping plate 111 in the thickness direction of the pole piece A (the Z-axis direction in Figure 2), and the first pole piece A1 is positioned between the first clamping plate 111 and the second clamping plate 112. Therefore, when the clamping actuator drives at least one of the first clamping plate 111 and the second clamping plate 112 to move toward the other, the first pole piece A1 is clamped between the first clamping plate 111 and the second clamping plate 112, and the implementation is remarkably straightforward.

After the first pole piece A1 is clamped between the first clamping plate 111 and the second clamping plate 112, the pulling actuator can drive the first clamping plate 111 and the second clamping plate 112 to move in unison. In this way, the purpose of pulling the first pole piece A1 is achieved.

The clamping actuator may be a pneumatic cylinder, an electric cylinder, or the like. The embodiments of the present disclosure do not impose any limitations on the clamping actuator. The pulling actuator may also be a pneumatic cylinder, an electric cylinder, or the like. The embodiments of the present disclosure do not impose any limitations.

In some embodiments, referring to FIG. 2, the pole piece cutting mechanism 2 includes: a second cutter 21, a second support member 22, and a pole piece cutting actuator. The second cutter 21 and the second support member 22 are arranged opposite each other in the thickness direction of the pole piece A, and the pole piece A is positioned between the second cutter 21 and the second support member 22. The pole piece cutting actuator is configured to drive at least one of the second cutter 21 and the second support member 22 to move toward the other, so that the pole piece A is clamped between the second cutter 21 and the second support member 22, thereby cutting the pole piece A.

The second cutter 21 and the second support member 22 are arranged opposite each other in the thickness direction of the pole piece A, and the pole piece A is positioned between the second cutter 21 and the second support member 22. Thus, when the pole piece cutting actuator drives at least one of the second cutter 21 and the second support member 22 to move toward the other, the pole piece A is clamped between the second cutter 21 and the second support member 22, thereby achieving the purpose of cutting the pole piece A.

In summary, the component that acts to be draped over the second winding needle 202 of the winding device 200 is the first tape B, rather than the section of pole piece used in the related art. In other words, the first tape B replaces the section of pole piece in the related art. In this way, the waste of the pole piece can be avoided, thereby achieving the effect of saving the pole piece and reducing the cost of the cell.

Additionally, when the third free end B1 of the first tape B is opposite the first free end A11 and the fourth free end B2 is opposite the second free end A21, the pulling action of the first tape storing assembly 33 can cause at least a part of the first tape B to deviate from the line connecting the third free end B1 and the fourth free end B2, thereby achieving the purpose of buffering the tape. Then, the tape bonding assembly 32 is used to adhere the third free end B1 to the first free end A11 and to adhere the fourth free end B2 to the second free end A21, thereby achieving the purpose of adhering the tape.

Thus, the shape of the first tape B will be non-linear, which in turn will make the preset length of the first tape B greater than the gap width between the first free end A11 and the second free end A21. This will enable the first tape B, which is longer than the gap width, to be adhered between the first free end A11 and the second free end A21 even when the gap between the first free end A11 and the second free end A21 is relatively small. Compared to the method of pulling the first pole piece A1 by the first pulling-apart assembly 11 to make the gap width between the first free end A11 and the second free end A21 approximately equal to (or slightly less than) the length of the first tape B in order to adhere the first tape B to the first free end A11 and the second free end A21, the present disclosure only requires the first pulling-apart assembly 11 to slightly pull the first pole piece A1 to create a slight gap between the first free end A11 and the second free end A21, and then the first tape B, which is much longer than the gap width, can be adhered to the first free end A11 and the second free end A21. Since the first pulling-apart assembly 11 does not need to pull the first pole piece A1 over a long distance, the tape bonding device 100 can be made relatively compact in size.

In addition, since it only requires the first pulling-apart assembly 11 to pull the first pole piece A1 to create a gap between the first free end A11 and the second free end A21 in the conveying direction of the pole piece A, followed by the first tape storing assembly 33 pulling the first tape B to buffer the tape, and finally, the tape bonding assembly 32 adhering the third free end B1 to the first free end A11 and the fourth free end B2 to the second free end A21 to achieve the purpose of adhering the tape, the principle of implementation is straightforward. Therefore, the structure of the tape bonding device 100 is simplified to a certain extent.

### Embodiment 2

The present disclosure provides a winding apparatus. Referring to Figure 1, the winding apparatus includes a tape bonding device 100.

The structure of the tape bonding device 100 can be the same as any of the tape bonding devices 100 mentioned above in the first embodiment, and can bring the same or similar beneficial effects. For specific details, please refer to the description of the tape bonding device 100 in the first embodiment. The present disclosure will not repeat it here.

In the embodiment of the present disclosure, since the tape bonding device 100 is compact in size. Based on this, when the tape bonding device 100 is applied to the winding apparatus, it can make the winding apparatus compact in size.

In some embodiments, referring to Figure 1, the winding apparatus includes: a winding device 200, a merging device 300, a first diaphragm unwinding device 400, a cathode pole piece unwinding device 500, a second diaphragm unwinding device 600, and an anode pole piece unwinding device 700. The first diaphragm unwinding device 400 is used to convey the first diaphragm to the merging device 300. The cathode pole piece unwinding device 500 is used to convey the cathode pole piece to the merging device 300. The second diaphragm unwinding device 600 is used to convey the second diaphragm to the merging device 300. The anode pole piece unwinding device 700 is used to convey the anode pole piece to the merging device 300. The tape bonding device is positioned on the conveying path of the anode pole piece; the tape bonding device is positioned upstream of the merging device 300. The merging device 300 is used to merge the first diaphragm, the cathode pole piece, the second diaphragm, and the anode pole piece in sequence to form a combined web and convey it to the winding device 200. The winding device 200 is used to wind the combined web to form a cell.

In this embodiment of the present disclosure, the first diaphragm unwinding device 400 can convey the first diaphragm to the merging device 300, the cathode pole piece unwinding device 500 can convey the cathode pole piece to the merging device 300, the second diaphragm unwinding device 600 can convey the second diaphragm to the merging device 300, and the anode pole piece unwinding device 700 can convey the anode pole piece to the merging device 300. Thus, after the first diaphragm, the cathode pole piece, the second diaphragm, and the anode pole piece reach the merging device 300, the merging device 300 merges the first diaphragm, the cathode pole piece, the second diaphragm, and the anode pole piece in sequence to form a combined web. After the combined web is formed, the merging device 300 can convey the combined web to the winding device 200, which can wind the combined web to form a cell.

Since the tape bonding device is arranged on the conveying path of the anode pole piece, and the tape bonding device is positioned upstream of the merging device 300, the tape bonding device can prevent waste of the anode pole piece, thereby save the anode pole piece and reduce the cost of the cell.

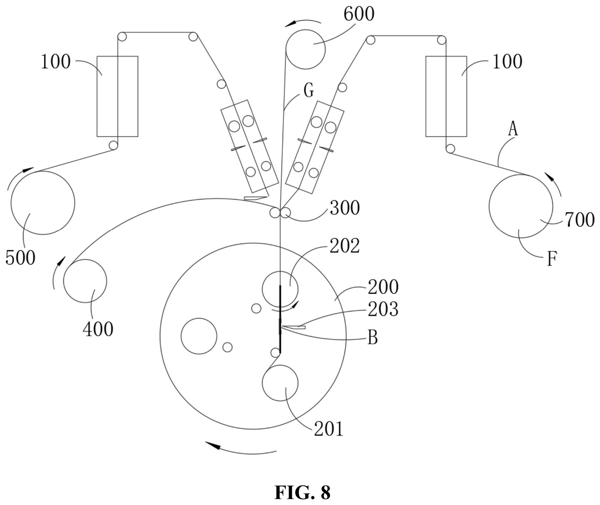

Furthermore, in some embodiments, as shown in Figure 8, a tape bonding device 100 is arranged on the conveying path of the cathode pole piece, and the tape bonding device 100 is positioned upstream of the merging device 300.

By arranging the tape bonding device 100 on the conveying path of the cathode pole piece, it functions to prevent waste of the cathode pole piece, thereby saving the cathode pole piece and reducing the cost of the cell.

In some embodiments, as shown in Figure 8, the winding device 200 includes: a first winding needle 201, a winding cutter 203, and a second winding needle 202. The merging device 300 is used to merge the first diaphragm, the cathode pole piece, the second diaphragm, and the anode pole piece in sequence to form a combined web, and to convey the combined web to the first winding needle 201. The first winding needle 201 is used to wind the combined web to form a cell. The winding cutter 203 is used to cut the combined web at the first tape B. The second winding needle 202 is used to continue winding the combined web to form another cell when the cut combined web is draped over the second winding needle 202.

Since the winding cutter 203 can cut the combined web at the first tape B, and then the second winding needle 202 can continue winding the combined web to form another cell when the cut combined web is draped over the second winding needle 202. Thus, it is possible to use the first tape B instead of the pole piece, thereby achieving the purpose of saving the pole piece.

In some embodiments, the first tape B includes a third free end B1, a fourth free end B2, and an intervening section located between the third free end B1 and the fourth free end B2. Both the third free end B1 and the fourth free end B2 are adhesive, while the intervening section is non-adhesive. In this way, on the one hand, it is possible to reduce the manufacturing cost of the first tape B, and on the other hand, it can also avoid the situation where the intervening section adheres to the pole piece A.

Although specific embodiments of the present disclosure have been illustrated in detail through examples, those skilled in the art should understand that the above examples are for illustrative purposes only and are not intended to limit the scope of the present disclosure. It should be understood by those skilled in the art that the embodiments described above can be modified without departing from the scope and spirit of the present disclosure. The scope of the present disclosure is defined by the appended claims.

## Claims

1. A tape bonding device, **characterized in that** the tape bonding device is arranged on a conveying path of a pole piece, and the tape bonding device comprises:
a pulling-apart mechanism (1);
a pole piece cutting mechanism (2) configured to cut the pole piece (A) so that the pole piece (A) is divided into a first pole piece (A1) and a second pole piece (A2), the first pole piece (A1) and the second pole piece (A2) each having a first free end (A11) and a second free end (A21) that are oppositely arranged, the pulling-apart mechanism (1) being configured to pull the first pole piece (A1) and/or the second pole piece (A2) so that a gap is formed between the first free end (A11) and the second free end (A21) in a conveying direction of the pole piece (A); and
a tape bonding mechanism (3) comprising:
a first tape feeding assembly (31) configured to provide a first tape (B) of a preset length, and to position a third free end (B1) of the first tape (B) opposite to the first free end (A11);
a first tape storing assembly (33) configured to pull the first tape (B) so that a fourth free end (B2) of the first tape (B) is positioned opposite to the second free end (A21), and at least a part of the first tape (B) deviates from a line connecting the third free end (B1) and the fourth free end (B2) to buffer the first tape (B); and
a tape bonding assembly (32) configured to adhere the third free end (B1) to the first free end (A11) and to adhere the fourth free end (B2) to the second free end (A21).

2. The tape bonding device according to claim 1, **characterized in that** the first tape feeding assembly (31) comprises:
a tape reel (311) configured to wind the tape, the tape having the third free end (B1);
a tape pulling assembly (312) configured to pull the tape so that the tape reel (311) rotates to unwind and to position the third free end (B1) opposite the first free end (A11); and
a tape cutting assembly (313) configured to cut the tape after the first tape storing assembly (33) buffers the first tape (B), so that the tape forms the fourth free end (B2), and the tape between the third free end (B1) and the fourth free end (B2) is the first tape (B).

3. The tape bonding device according to claim 2, **characterized in that**, the tape pulling assembly (312) comprises:
a tape pulling member (3121);
an adhering actuator configured to drive the tape pulling member (3121) to move in a direction towards the third free end (B1), so that the tape pulling member (3121) contacts the third free end (B1) to adhere the third free end (B1) to the tape pulling member (3121); and
a tape pulling actuator configured to drive the tape pulling member (3121) to pull the tape in a direction towards the first free end (A11), so that the third free end (B1) is opposite to the first free end (A11).

4. The tape bonding device according to claim 3, **characterized in that**, the tape pulling member (3121) is a tape pulling roller; the tape pulling assembly (312) further comprises:
a rotary actuator configured to drive the tape pulling roller to rotate in a first direction about an axis of the tape pulling roller when the tape pulling roller contacts the third free end (B1), the tape pulling actuator being configured to drive the tape pulling member (3121) to move in a direction pointing from the first free end (A11) to the second free end (A21), rolling and adhering the third free end (B1) to a peripheral wall of the tape pulling roller to adhere the third free end (B1) to the tape pulling roller.

5. The tape bonding device according to claim 4, **characterized in that**, the rotary actuator is further configured to drive the tape pulling roller to rotate in a second direction, opposite to the first direction, about the axis of the tape pulling roller when the third free end (B1) is opposite to the first free end (A11), the tape pulling actuator further being configured to drive the tape pulling member (3121) to move in a direction pointing from the second free end (A21) to the first free end (A11) to flatten the third free end (B1), which is rolled and adhered to the peripheral wall of the tape pulling roller, onto the tape bonding assembly (32).

6. The tape bonding device according to any one of claims 3 to 5, **characterized in that**, the tape bonding assembly (32) comprises:
a first gripping assembly (321) arranged corresponding to the first free end (A11), the first gripping assembly (321) having a first adsorption hole, the tape pulling actuator being configured to drive the tape pulling member (3121) to pull the tape in the direction towards the first free end (A11), the first adsorption hole being configured to adsorb the first tape (B), the first gripping assembly (321) being configured to adhere the third free end (B1) to the first free end (A11); and
a second gripping assembly (322) arranged corresponding to the second free end (A21), the second gripping assembly (322) having a second adsorption hole, the second adsorption hole being configured to adsorb the first tape (B), the second gripping assembly (322) being configured to adhere the fourth free end (B2) to the second free end (A21).

7. The tape bonding device according to claim 6, **characterized in that**,
the first gripping assembly (321) comprises a first gripping plate (3211) and a second gripping plate (3212) that are arranged opposite to each other in a thickness direction of the pole piece (A), the first adsorption hole being arranged in the first gripping plate (3211), the first free end (A11) and the third free end (B1) both being positioned between the first gripping plate (3211) and the second gripping plate (3212), the first gripping plate (3211) and the second gripping plate (3212) being movable towards or away from each other to clamp or release the third free end (B1) and the first free end (A11) between the first gripping plate (3211) and the second gripping plate (3212); and/or,
the second gripping assembly (322) comprises a third gripping plate (3221) and a fourth gripping plate (3222) that are arranged opposite to each other in the thickness direction of the pole piece (A), the second adsorption hole being arranged in the third gripping plate (3221), the second free end (A21) and the fourth free end (B2) both being positioned between the third gripping plate (3221) and the fourth gripping plate (3222), the third gripping plate (3221) and the fourth gripping plate (3222) being movable towards or away from each other to clamp or release the fourth free end (B2) and the second free end (A21) between the third gripping plate (3221) and the fourth gripping plate (3222).

8. The tape bonding device according to any one of claims 2 to 7, **characterized in that**, the first tape feeding assembly (31) further comprises:
a tape-feed guide roller (314) positioned on a conveying path of the tape and upstream of the tape cutting assembly (313), the tape being draped over the tape-feed guide roller (314); and
a gripping member (315) movable in a direction towards or away from the tape-feed guide roller (314) to clamp or release the tape between the gripping member (315) and the tape-feed guide roller (314).

9. The tape bonding device according to any one of claims 2 to 8, **characterized in that**, the first tape feeding assembly (31) further comprises:
a tape-feeding suction member(316) positioned on a conveying path of the tape and upstream of the tape cutting assembly (313), the tape-feeding suction member(316) being configured to adsorb the first tape (B).

10. The tape bonding device according to any one of claims 1 to 9, **characterized in that**, the first tape storing assembly (33) further comprises:
a tape storing member (331); and
a tape-storing actuator configured to drive the tape storing member (331) to pull the first tape (B) in the thickness direction of the pole piece (A) in a direction away from the pole piece (A), so that the fourth free end (B2) is positioned opposite to the second free end (A21), and at least a part of the first tape (B) deviates from the line connecting the third free end (B1) and the fourth free end (B2) to buffer the first tape (B).

11. The tape bonding device according to claim 10, **characterized in that**, the tape storing member (331) is a tape storing roller, which is positioned on a side of the first tape (B) close to the pole piece (A) in a thickness direction of the pole piece (A), the tape-storing actuator being configured to drive the tape storing roller to move in the thickness direction of the pole piece (A) in a direction away from the pole piece (A), so that the tape storing roller abuts against a surface of the first tape (B) close to the pole piece (A) to pull the first tape (B).

12. The tape bonding device according to claim 11, **characterized in that**, the first tape storing assembly (33) further comprises:
a first tape-storing guiding roller (333); and
a second tape-storing guiding roller (334), the second tape-storing guiding roller (334) and the first tape-storing guiding roller (333) being spaced apart from each other in a direction pointing from the fourth free end (B2) to the third free end (B1), and both the first tape-storing guiding roller (333) and the second tape-storing guiding roller (334) being positioned on a side of the first tape (B) away from the pole piece (A), when the tape storing roller abuts against the first tape (B), a projection of the tape storing roller in a direction perpendicular to the direction pointing from the fourth free end (B2) to the third free end (B1) is positioned between the first tape-storing guiding roller (333) and the second tape-storing guiding roller (334).

13. The tape bonding device according to claim 12, **characterized in that**, after the third free end (B1) is adhered to the first free end (A11) and the fourth free end (B2) is adhered to the second free end (A21), the tape storing roller is configured to move in the thickness direction of the pole piece (A) and towards the pole piece (A) to release the first tape (B).

14. The tape bonding device according to any one of claims 1 to 13, **characterized in that**, the pulling-apart mechanism (1) further comprises:
a first pulling-apart assembly (11) and a second pulling-apart assembly (12), the second pulling-apart assembly (12) being arranged opposite the first pulling-apart assembly (11), the first pulling-apart assembly (11) being configured to pull the first pole piece (A1), the second pulling-apart assembly (12) being configured to pull the second pole piece (A2), so that the gap is formed between the first free end (A11) and the second free end (A21) in the conveying direction of the pole piece (A).

15. The tape bonding device according to claim 14, **characterized in that**,
a direction in which the first pulling-apart assembly (11) pulls the first pole piece (A1) is opposite to a direction in which the second pulling-apart assembly (12) pulls the second pole piece (A2); or,
the direction in which the first pulling-apart assembly (11) pulls the first pole piece (A1) is the same as the direction in which the second pulling-apart assembly (12) pulls the second pole piece (A2), and a speed at which the first pulling-apart assembly (11) pulls the first pole piece (A1) is different from a speed at which the second pulling-apart assembly (12) pulls the second pole piece (A2).

16. The tape bonding device according to claim 14 or 15, **characterized in that**,
the first pulling-apart assembly (11) and the second pulling-apart assembly (12) are further configured to clamp the first pole piece (A1) and the second pole piece (A2) respectively before the pole piece cutting mechanism (2) cuts the pole piece (A).

17. The tape bonding device according to claim 16, **characterized in that**,
the first pulling-apart assembly (11) comprises:
a first clamping plate (111);
a second clamping plate (112) arranged opposite the first clamping plate (111) in a thickness direction of the pole piece (A), the first pole piece (A1) being positioned between the first clamping plate (111) and the second clamping plate (112);
a clamping actuator configured to drive at least one of the first clamping plate (111) and the second clamping plate (112) to move towards the other, so that the first pole piece (A1) is clamped between the first clamping plate (111) and the second clamping plate (112); and
a pulling actuator configured to drive the first clamping plate (111) and the second clamping plate (112) to move in unison to pull the first pole piece (A1).

18. A winding apparatus, **characterized in that**, the winding apparatus comprises the tape bonding device (100) according to any one of claims 1 to 17.

19. The winding apparatus according to claim 18, **characterized in that**, the winding apparatus comprises:
a winding device (200);
a merging device (300);
a first diaphragm unwinding device (400) configured to convey a first diaphragm to the merging device (300);
a cathode pole piece unwinding device (500) configured to convey a cathode pole piece to the merging device (300);
a second diaphragm unwinding device (600) configured to convey a second diaphragm to the merging device (300); and
an anode pole piece unwinding device (700) configured to convey an anode pole piece to the merging device (300), the tape bonding device (100) being arranged on a conveying path of the anode pole piece and upstream of the merging device (300);
the merging device (300) being configured to merge the first diaphragm, the cathode pole piece, the second diaphragm, and the anode pole piece in sequence to form a combined web and convey the combined web to the winding device (200), and the winding device (200) being configured to wind the combined web to form a cell.

20. The winding apparatus according to claim 19, **characterized in that**, the tape bonding device (100) is arranged on a conveying path of the cathode pole piece and upstream of the merging device (300).

21. The winding apparatus according to claim 19 or 20, **characterized in that**, the winding device (200) comprises:
a first winding needle (201), the merging device (300) is configured to merge the first diaphragm, the cathode pole piece, the second diaphragm, and the anode pole piece in sequence to form a combined web and convey the combined web to the first winding needle (201), and the first winding needle (201) is configured to wind the combined web to form a cell;
a winding cutter (203) configured to cut the combined web at the first tape (B); and
a second winding needle (202) configured to continue winding the combined web to form another cell when the cut combined web is draped over the second winding needle (202).

22. The winding apparatus according to any one of claims 18 to 21, **characterized in that**, the first tape (B) comprises a third free end (B1), a fourth free end (B2), and an intervening section located between the third free end (B1) and the fourth free end (B2), the third free end (B1) and the fourth free end (B2) both are adhesive, and the intervening section is non-adhesive.
